# EUROPÄISCHE PATENTANMELDUNG

(11) **EP 2 667 268 A1**
(43) Veröffentlichungstag der Anmeldung: **27.11.2013**
(21) Anmeldenummer: 12169328.7
(22) Anmeldetag: 24.05.2012
(51) Int. Cl.: G05B 19/042, G06F 11/30, G05B 19/05

(54) **Verfahren zum Betrieb eines Automatisierungsgeräts**

(71) Anmelder: Siemens Aktiengesellschaft, 80333 München (DE)
(72) Erfinder: Pohlan, Rudolf, 76337 Waldbronn (DE)

(57) **Zusammenfassung**

Die Erfindung betrifft zuvorderst ein Verfahren zum Betrieb eines Automatisierungsgeräts (10), in dessen Speicher (14) eine Automatisierungslösung (16) geladen ist, wobei ein technologieorientierter Bedieninterpreter (26) einerseits Zugriff auf einen Datenhaushalt der Automatisierungslösung (16) hat und andererseits externe Kommandos (28) bedienen kann, indem solche Kommandos (28) analysiert und entsprechend der Analyse umgesetzt werden, wobei der technologieorientierte Bedieninterpreter (26) aus jeweils einem Kommando (28) zumindest eine Instanzbezeichnung (30) und zumindest einen Befehl (32) extrahiert, wobei der technologieorientierte Bedieninterpreter (26) im Datenhaushalt der Automatisierungslösung (16) ein zu der Instanzbezeichnung (30) passendes Objekt (34) sucht und im Erfolgsfalle prüft, ob der in dem Kommando (28) enthaltene Befehl (32) für das gefundene Objekt (34) definiert ist und wobei der technologieorientierte Bedieninterpreter (26) eine Ausführung des Befehls (32) für das gefundene Objekt (34) veranlasst.

## Beschreibung

Die Erfindung betrifft ein Verfahren zum Betrieb eines Automatisierungsgeräts und ein Verfahren zum Zugriff auf ein Automatisierungsgerät, insbesondere ein Verfahren zum Zugriff auf eine auf einem Automatisierungsgerät geladene oder ablaufende Automatisierungslösung. Beide Verfahrensaspekte werden hier und im Folgenden unter der Bezeichnung als Verfahren zum Betrieb eines Automatisierungsgeräts zusammengefasst. Der Begriff Automatisierungsgerät umfasst dabei auch sogenannte Prozessrechner und spezielle speicherprogrammierbare Steuerungen (SPS). Als Automatisierungslösung werden dabei jedes Programm oder jede Kollektion von Programmen verstanden, das bzw. die zur Realisierung einer Automatisierungsaufgabe in ein Automatisierungsgerät oder eine Mehrzahl von Automatisierungsgeräten geladen werden, inklusive der bei der Ausführung des Programms oder der Programme verwendeten oder erzeugten Daten. Die Automatisierungsaufgabe bezieht sich dabei auf einen technischen Prozess und die davon umfassten Aktoren, Sensoren, Aggregate und so weiter. Der im Rahmen der Automatisierungsaufgabe gesteuerte und/oder überwachte technische Prozess wird im Folgenden kurz als Anlage bezeichnet. Weil eine Automatisierungslösung auf eine Mehrzahl von Automatisierungsgeräten verteilt sein kann, soll der Begriff Automatisierungsgerät einerseits ein einzelnes Automatisierungsgerät, aber auch eine Kollektion kommunikativ verbundener Automatisierungsgeräte umfassen, ohne dass jeweils ausdrücklich auf eine eventuelle Mehrzahl von Automatisierungsgeräten hingewiesen wird.

Automatisierungslösungen der eingangs genannten Art werden heute als Programme oder sogenannte Bausteinlisten auf Automatisierungsgeräte geladen. Eine Bedienung der jeweiligen Anlage erfolgt typischerweise durch Komponenten eines sogenannten Leitsystems, also zum Beispiel einem oder mehreren davon umfassten sogenannten Bedien- und Beobachtungsgeräten, die im Folgenden mitunter kurz auch nur als BuB-Geräte bezeichnet sind, indem Programmvariablen oder Bausteinvariablen in Programm- oder Datenbausteinen entsprechend gesetzt werden. Zur Beobachtung und Diagnose werden Aktualwerte solcher Variablen zyklisch oder sporadisch gelesen und einem Bediener in geeigneter Weise dargestellt.

Eine solche Bedienung eines Automatisierungsgeräts ist heute durch das Programmiermodell des jeweiligen Automatisierungsgeräts festgelegt. Als Programmiermodell wird dabei die Organisation des oder der Programme und der Daten eines Automatisierungsgerätetyps verstanden. Weil die Bedienung eines Automatisierungsgeräts durch das jeweilige Programmiermodell festgelegt ist, rechtfertigt sich die Aussage, dass im bisherigen Stand der Technik auch ein Bedienmodell zum Zugriff auf das Automatisierungsgerät und die Automatisierungslösung durch das Programmiermodell bestimmt ist.

Dies ist aber noch nicht optimal, weil ein Zugriff entsprechend dem Programmiermodell kaum Eingriffe in die jeweilige Anlage auf technologischer Ebene erlaubt. Eingriffe in die Anlage auf technologischer Ebene sind aber besonders gut verständlich, weil zum Beispiel ein zu beeinflussendes Aggregat direkt mit einer verständlichen Bezeichnung benannt werden kann, ohne dass - entsprechend dem Programmiermodell - der Eingriff durch Verwendung üblicherweise eher kryptischer Bezeichnungen der von der Automatisierungslösung verwendeten Variablen ausgedrückt werden muss.

Komfortable Bedien- und Beobachtungssysteme und -geräte sowie Diagnosewerkzeuge werden heute von allen Leitsystemherstellern angeboten und ermöglichen im Einsatz eine Darstellung von Bedien- und Prozessbildern und dergleichen. Solche Darstellungen sind für einen Technologen und einen Anlagenfahrer ausgelegt und verständlich. Nachteilig wirkt sich aber aus, dass Änderungen in einem oder mehreren Programmen auf dem Automatisierungsgerät oft auch Änderungen in den Bedien- und Beobachtungsgeräten nach sich ziehen. Dies ist speziell dann der Fall, wenn sich eine Struktur oder die Namen von Programmvariablen oder Datenbausteinen auf dem Automatisierungsgerät ändern.

Durch technologiebezogene Programmbausteine und Variablen, deren Technologiebezug für einen Einsatz zum Beispiel in der Prozessindustrie durch eine entsprechende Benennung und/oder Kommentierung zum Ausdruck kommt, wird quasi der Charakter einer technologieorientierten Bedienschnittstelle auf dem Automatisierungsgerät erreicht. Solche Programmbausteine werden häufig in Programm- oder Bausteinbibliotheken bereitgestellt. Sie sind aber allenfalls als semi-technologisch anzusehen, weil sie notwendigerweise dem Programmiermodell des Automatisierungsgeräts gehorchen. Speziell der Nachteil, dass Änderungen an einem Programm auf einem Automatisierungsgerät auch eine Notwendigkeit von Änderungen in den Bedien- und Beobachtungsgeräten nach sich zieht, besteht fort. Zudem ist bei solchen Änderungen die Verfügbarkeit der Anlage beschränkt, denn Eingriffe in die Anlage an Bedien- und Beobachtungsgeräten sind in einem Zeitraum zwischen dem Übertragen von geänderten Programmen zum Automatisierungsgerät und einer Anpassung der Bedien- und Beobachtungsgeräte an diese Änderungen nicht möglich. Gerade die Konsistenz zwischen den Strukturen der Bedien- und Beobachtungsvariablen und den korrespondierenden Programmvariablen auf dem Automatisierungsgerät kann demnach speziell in Phasen von Programmänderungen, also zum Beispiel bei einer Anlagenoptimierung, zumindest temporär gefährdet sein. Die Verfügbarkeit des Bedien- und Beobachtungssystems lässt sich in solchen Phasen nicht vollständig und durchgängig gewährleisten. Das Bedien- und Beobachtungssystem ist demnach in solchen Phasen nicht oder nur teilweise betriebsbereit.

Eine Aufgabe der Erfindung besteht demnach darin, eine verbesserte Möglichkeit zum Betrieb eines Automatisierungsgeräts anzugeben, insbesondere eine Möglichkeit zum Betrieb eines Automatisierungsgeräts mit einer technologieorientierten Bedienschnittstelle anzugeben.

Diese Aufgabe wird erfindungsgemäß mit den Merkmalen des Anspruchs 1 gelöst. Dazu sind bei einem Verfahren zum Betrieb eines Automatisierungsgeräts, in dessen Speicher eine Automatisierungslösung geladen ist, ein technologieorientierter Bedieninterpreter und des Weiteren Folgendes vorgesehen: Der technologieorientierte Bedieninterpreter hat einerseits Zugriff auf einen Daten- oder Variablenhaushalt der Automatisierungslösung und kann andererseits externe Kommandos, zum Beispiel von einem BuB-Gerät, bedienen, indem solche Kommandos analysiert und entsprechend der Analyse umgesetzt werden. Im Rahmen der Analyse eines Kommandos extrahiert der technologieorientierte Bedieninterpreter aus dem jeweiligen Kommando zumindest eine Instanzbezeichnung und zumindest einen Befehl. Anhand der extrahierten Instanzbezeichnung sucht der technologieorientierte Bedieninterpreter im Datenhaushalt der Automatisierungslösung ein zu der Instanzbezeichnung korrespondierendes Objekt. Zu einer Instanzbezeichnung kann es jeweils nur ein genau korrespondierendes Objekt geben. Dieses wird im Folgenden als das zu der Instanzbezeichnung passende Objekt bezeichnet. Im Erfolgsfall, wenn also bei der Suche im Datenhaushalt der Automatisierungslösung ein passendes Objekt gefunden wurde, prüft der technologieorientierte Bedieninterpreter, ob der in dem Kommando enthaltene Befehl für das gefundene Objekt definiert ist. Wenn dies der Fall ist, veranlasst der technologieorientierte Bedieninterpreter eine Ausführung des Befehls für das gefundene Objekt.

Der Vorteil der Erfindung besteht darin, dass sicher und auf technologischer Ebene, also unabhängig vom Programmiermodell des Automatisierungsgeräts, Eingriffe in die Anlage, also Bedienhandlungen in Bezug auf die Anlage, vorgenommen werden können, indem entsprechende Kommandos an den Bedieninterpreter übermittelt werden. Durch die Analyse und Verarbeitung solcher Kommandos realisiert der Bedieninterpreter eine technologische und an der technischen Ausrichtung der Anlage orientierte technologische Bedienschnittstelle. Diese wird auf einem oder mehreren Automatisierungsgeräten zur Verfügung gestellt und ermöglicht bei deren Verwendung zugelassene Bedienhandlungen in Bezug auf die Anlage.

Weil nur solche Kommandos durch den Befehlsinterpreter ausgeführt werden können, deren Instanzbezeichnung und deren Befehl im Datenhaushalt der Automatisierungslösung angelegt sind, ergibt sich damit quasi eine eigene Sprache mit einem auf technologischer Ebene definierten Sprachumfang. Die Einflussmöglichkeiten von Seiten des BuB-Geräts beschränken sich damit auf das, was in dieser eigenen Sprache zugelassen ist. Dies ist ein weiterer wesentlicher Vorteil der Erfindung.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass der Datenhaushalt der Automatisierungslösung in einem die Anlage technologisch beschreibenden Projektbaum mit einer Mehrzahl von Objekten baumartig organisiert ist und dass im Rahmen des an den technologieorientierten Bedieninterpreter gerichteten Kommandos als Instanzbezeichnung ein Instanznamenspfad oder ein Teil eines solchen Instanznamenspfads angegeben wird. Die baumartige Struktur des Projektbaums ermöglicht ein schnelles Traversieren (Durchsuchen) des Projektbaums. Wenn die Instanzbezeichnung in Form eines Instanznamenspfads oder eines Teils davon angegeben wird, umfasst diese Angabe bereits Informationen, um das so referenzierte Objekt unmittelbar oder quasi unmittelbar im Projektbaum zu lokalisieren.

Der Projektbaum und die dort organisierten Objekte und Aktionen führen das Prinzip des technologisch definierten Sprachumfangs fort. Nur Objekte des Projektbaums können anhand der jeweiligen Instanzbezeichnung oder des Instanznamenspfads gefunden werden. Die Einflussmöglichkeit auf die Anlage ist damit auf diejenigen Aggregate und Komponenten beschränkt, die durch einen entsprechenden Repräsentanten in dem Projektbaum vertreten sind, also durch ein Objekt des Projektbaums. Auch auf solche im Projektbaum durch ein entsprechendes Objekt repräsentierten Aggregate und Komponenten der Anlage ist die Einflussmöglichkeit beschränkt und zwar durch die für das jeweilige Objekt definierten Aktionen. Wenn also zum Beispiel unter Verwendung des Programmiermodells des Automatisierungsgeräts grundsätzlich ohne Weiteres eine Drehzahl eines von der Anlage umfassten Motors geändert werden kann, indem ein als Drehzahlsollwert vorgesehener Speicherinhalt geändert wird, sind solche Veränderungen einer Drehzahl unter Verwendung des technologieorientierten Bedieninterpreters nur möglich, wenn einerseits der Motor durch ein entsprechendes Objekt im Projektbaum repräsentiert ist und andererseits für dieses Objekt eine Aktion definiert ist, welche die Drehzahl des Motors betrifft. Ist entweder der Motor nicht im Projektbaum repräsentiert oder ist bei einem im Projektbaum repräsentierten Motor für das entsprechende Objekt keine solche Aktion definiert, ist eine Beeinflussung der Motordrehzahl unmöglich. Die Funktionalität der Anlage und der davon umfassten Aggregate und Komponenten ist damit im Automatisierungsgerät gekapselt und der Projektbaum definiert eine Bedienschnittstelle und die zugelassenen Eingriffsmöglichkeiten in die jeweilige Anlage. Der technologieorientierte Bedieninterpreter erlaubt die automatische Verwendung der Bedienschnittstelle und die mittelbare oder unmittelbare Ausführung von externen Kommandos, also zum Beispiel Kommandos von einem BuB-Gerät zur Beeinflussung der jeweiligen Anlage.

Bei einer weiteren Ausführungsform des Verfahrens definieren oder referenzieren einzelne Objekte des Projektbaums als Basis für mit einem externen Kommando übermittelbare Befehle jeweils zumindest eine Aktion. Dies lässt sich am besten anhand eines Beispiels erläutern: Wenn eine Anlage eine Mehrzahl von Ventilen und Motoren als Aktoren umfasst, kann jeder derartige Aktor mit einer eindeutigen Instanzbezeichnung ggf. einem die Instanzbezeichnung umfassenden Instanznamenspfad referenziert werden, zum Beispiel "Ventil Warmwasser", "Ventil Kaltwasser", "Mischermotor" bzw. "Anlagenteil Dosieren.Ventil Warmwasser", "Anlagenteil Dosieren.Ventil Kaltwasser", "Anlagenteil Mischen.Mischermotor", und so weiter. Ein komplettes Kommando kann somit zum Beispiel lauten "Anlagenteil Dosieren.Ventil Warmwasser.Oeffnen". Ein solches Kommando analysiert der technologieorientierte Bedieninterpreter und extrahiert daraus einerseits die Instanzbezeichnung oder den Instanznamenspfad, also "Ventil Warmwasser" bzw. "Anlagenteil Dosieren.Ventil Warmwasser", und den Befehl, also "Oeffnen". Wenn in dem Projektbaum ein passendes Objekt enthalten ist, und für dieses zum Beispiel die Aktionen "Oeffnen" und "Schliessen" definiert sind, kann die zu dem in dem Kommando übermittelten Befehl "Oeffnen" passende Aktion "Oeffnen" ausgeführt werden. Hinsichtlich der Ausführung einer solchen Aktion kommen zumindest zwei Alternativen in Betracht: Entweder umfasst das Objekt im Rahmen der Definition der jeweiligen Aktion selbst ein oder mehrere Programmcodeanweisungen, mit denen die jeweilige Aktion implementiert ist, oder das Objekt umfasst eine Referenz auf eine externe Speicherstelle, an der ein oder mehrere Programmcodeanweisungen zur Implementation der jeweiligen Aktion hinterlegt sind. Bei den Programmcodeanweisungen kann es sich um Programmcodeanweisungen in einer Maschinensprache und damit einer durch den Prozessor des jeweiligen Automatisierungsgeräts unmittelbar ausführbaren Form oder um Programmcodeanweisungen handeln, die zur Ausführung durch einen Interpreter bearbeitet werden, wobei im letzten Fall der technologieorientierte Bedieninterpreter eine solche Interpreterfunktionalität umfasst oder auf diese in geeigneter Form Zugriff hat.

Bei einer Ausführungsform des Verfahrens, bei dem einzelne Objekte des Projektbaums als Basis für mit einem externen Kommando übermittelbare Befehle jeweils zumindest eine Aktion definieren oder referenzieren, ist vorgesehen, dass eine einem Objekt des Projektbaums zugeordnete Aktion ein oder mehrere Sicherheitsabfragen umfasst. Dann kann zum Beispiel sicher gestellt werden, dass ein "Oeffnen"-Befehl für ein Ventil nur dann ausgeführt wird, wenn die sonstigen Anlagenzustände dies erlauben. So kann zum Beispiel die Ausführbarkeit eines "Oeffnen"-Befehls davon abhängig gemacht werden, ob sich stromabwärts des Ventils eine Auffangform in einer dafür vorgesehenen Position befindet oder ob ein stromabwärts des Ventils befindlicher Reaktor zumindest nicht bis zu seiner Maximalkapazität gefüllt ist oder dergleichen. Eine mögliche Formulierung einer solchen Sicherheitsabfrage könnte dabei wie folgt lauten:
IF ( DB5.ist < DB5.max ) THEN DB6.open = 1

Die Bezeichner "DB5" und "DB6" sind dabei im Rahmen des Programmiermodells des Automatisierungsgeräts gültige Bezeichner und bezeichnen einen jeweiligen Datenbaustein (DB = Datenbaustein). Die Bezeichner "ist", "max" und "open" sind im Datenhaushalt des Automatisierungsgeräts definierte Variablen und bezeichnen zum Beispiel Speicherstellen, an denen der aktuelle Füllstand des Mischers und ein oberer Grenzwert für den Füllstand hinterlegt sind, sowie einen Ausgang, der zum Öffnen des Warmwasser-Ventils führt.

Auf die gleiche Art und Weise können auch wechselseitige Verriegelungen durchgeführt werden, die zum Beispiel bei einer Anlage, bei der ein Mischerbehälter aus mehreren Reaktoren beschickt wird, sicher stellen, dass der Materialabzug jeweils nur aus einem Reaktor stattfindet, weil ansonsten zwar eine Erhöhung des Füllstands im Mischer feststellbar ist, diese Füllstandserhöhung aber nicht eindeutig genau einem zuströmenden Material zugeordnet werden kann und damit eine Einhaltung von Rezeptvorgaben oder dergleichen nicht möglich ist. Eine mögliche Formulierung einer diesbezüglichen Sicherheitsabfrage für ein Ventil zum Abziehen von Material aus einem Reaktor würde damit zum Beispiel die Abfrage umfassen, ob alle anderen Ventile zum Abziehen von Material aus anderen Reaktoren geschlossen sind. Andersartige Verriegelungen sind selbstverständlich ebenfalls denkbar.

Darüber hinaus sind auch Sicherheitsabfragen denkbar, die nicht unmittelbar mit Anlagenzuständen korreliert sind, zum Beispiel Sicherheitsabfragen, die ein bestimmtes Kommando und die Ausführung der damit verbundenen Aktion nur in einem Handbetrieb, Einrichtbetrieb oder Automatikbetrieb zulassen.

Des Weiteren kann als Sicherheitsabfrage eine Berechtigung des Bedieners des jeweiligen BuB-Geräts geprüft werden. Dafür ist erforderlich, dass sich ein Bediener zur Vornahme von Bedienhandlungen am BuB-Gerät anmeldet und dass dem Bediener daraufhin ein Berechtigungsstatus zugewiesen wird. Hinsichtlich der Sicherheitsabfrage muss die Aktion dann einen Vergleich kodieren, ob ein jeweiliger Sicherheitsstatus den Anforderungen entspricht. Ein an dem BuB-Gerät abgesetztes Kommando kann durch Abarbeitung eines zugehörigen Befehls danach nur ausgeführt werden, wenn der Sicherheitsstatus des Bedieners ausreichend ist.

Damit wird das Konzept des technologisch definierten Sprachumfangs noch weiter fortgeführt, indem eine Ausführbarkeit von Kommandos innerhalb dieses beschränkten Sprachumfangs an Bedingungen geknüpft ist oder geknüpft werden kann.

Der Vorteil der Erfindung und ihrer Ausgestaltungen lässt sich in drei unterschiedliche Aspekte aufteilen:
1. Es ergibt sich eine leichtere Möglichkeit, BuB-Programme zu erstellen, weil mit weitgehend natürlichsprachlichen Ausdrücken eines Technologen operiert werden kann, ohne die Interna der Ablage der einzelnen Daten auf Seiten des Automatisierungsgeräts kennen zu müssen.
2. Kapselung. Das Bedien- und Beobachtungsgerät kann auf Seiten des Automatisierungsgeräts nur das veranlassen, was auf Seiten des Automatisierungsgeräts in dem technologischen Projektbaum auch angelegt ist. Ein direkter Zugriff auf einzelne Daten des Automatisierungsgeräts ist nicht mehr möglich, so dass für das BuB-Gerät quasi ein technologisch definierter Sprachumfang für Bedien- und Beobachtungshandlungen zur Verfügung steht, die "sicherheitsunkritisch" sind; spezielle, also zum Beispiel sicherheitskritische Bedienhandlungen können von einer Berechtigungsstufe oder einer sonstigen Sicherheitsabfrage abhängig gemacht werden.
3. Es ergibt sich eine permanente Bedienbarkeit der Anlage und des damit realisierten technischen Prozesses, weil im Gegensatz zu früher nicht mehr erforderlich ist, die komplette Beschreibung der Programmvariablen oder Bausteinvariablen redundant sowohl auf dem oder jedem Automatisierungsgerät und dem oder jedem Bedien- und Beobachtungsgerät vorhalten zu müssen, denn das Bedien- und Beobachtungsgerät bedient sich seines Sprachumfangs und bei Verwendung entsprechender "Vokabeln" werden diese vom Bedieninterpreter ausgewertet und deren Auswertung führt gegebenenfalls zur Ausführung von Programmcodes auf Seiten des Automatisierungssystems, so dass nur auf dieser Seite eine Konsistenz der Daten erforderlich ist.

Der Bedieninterpreter kann mit den Mitteln des Betriebssystems des jeweiligen Automatisierungsgeräts in den Speicher des Automatisierungsgeräts, zum Beispiel in den Speicher einer als Automatisierungsgerät fungierenden speicherprogrammierbaren Steuerung, geladen und dort in einer bestimmten Laufzeitsystemebene zyklisch oder ereignisgesteuert zur Ausführung gebracht werden. Der hier vorgestellte Ansatz ist vor allem für Hersteller speicherprogrammierbarer Steuerungen von Nutzen, weil damit die Einsetzbarkeit einer solchen speicherprogrammierbaren Steuerung auch in einem Prozessleitsystem deutlich verbessert werden kann und die Entwicklungskosten für ein dediziertes Automatisierungsgerät für die Prozessindustrie entfallen können.

Die oben genannte Aufgabe wird auch mit einem Automatisierungsgerät zur Steuerung und/oder Überwachung einer Anlage zur Realisierung eines technischen Prozesses gelöst, die nach dem Verfahren wie hier und im Folgenden beschrieben arbeitet und dazu Mittel zur Durchführung des Verfahrens umfasst. Das

Automatisierungsgerät umfasst als Mittel zur Durchführung des Verfahrens zumindest eine Verarbeitungseinheit in Form von oder nach Art eines Mikroprozessors und einen Speicher, in den ein Computerprogramm zur Implementation des Verfahrens wie hier und im Folgenden beschrieben geladen oder ladbar ist. Die Erfindung ist insoweit in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Automatisierungsgerät, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungsgerät zur Steuerung einer Anlage zur Realisierung eines technischen Prozesses, wobei mit einem Bedien- und Bobachtungsgerät ein Zugriff auf das Automatisierungsgerät und damit auf die Anlage möglich ist,
- FIG 2: einzelne Details beim Zusammenwirken des Bedien- und Bobachtungsgeräts mit einem auf dem Automatisierungsgerät implementierten technologieorientierten Bedieninterpreter,
- FIG 3: eine Übersichtsdarstellung für eine Möglichkeit für einen Zugriff auf einen Datenhaushalt des Automatisierungsgeräts mittels des technologieorientierten Bedieninterpreters und
- FIG 4: Varianten zur Realisierung eines solchen Zugriffs auf den Datenhaushalt des Automatisierungsgeräts.

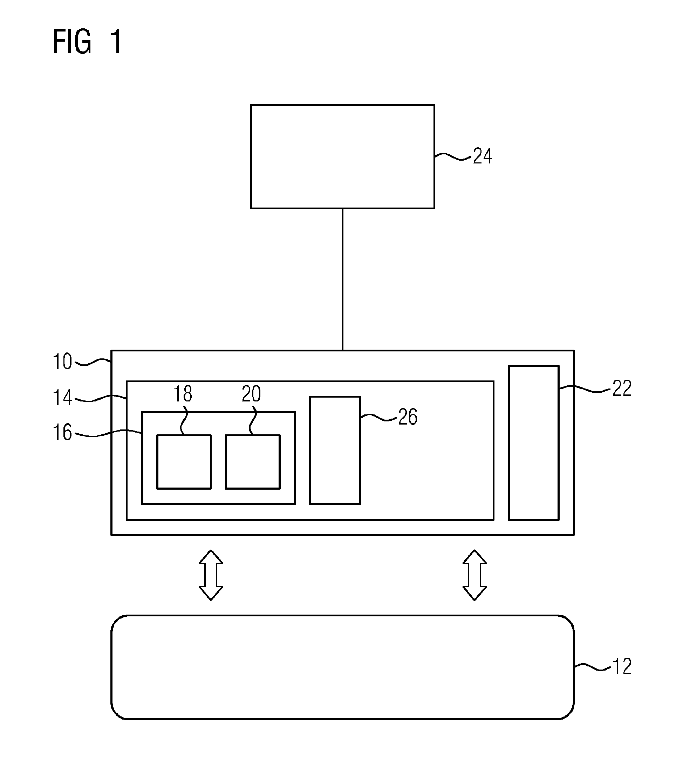

FIG 1 zeigt schematisch stark vereinfacht ein Automatisierungsgerät 10, das hier zur Vereinfachung der Darstellung und der weiteren Beschreibung stellvertretend für eine grundsätzlich beliebige Anzahl von untereinander kommunikativ verbundenen Automatisierungsgeräten steht. Das Automatisierungsgerät 10 ist zur Steuerung und/oder Überwachung einer nicht näher dargestellten Anlage 12 vorgesehen und eingerichtet. Die Anlage 12 realisiert einen jeweiligen technischen Prozess, zum Beispiel einen Prozess zum Umformen oder Transportieren von Material, Energie oder Information, etc. und die Anlage umfasst dafür an sich bekannte Aggregate und Komponenten sowie Sensoren und Aktoren zur Aufnahme von Zustandsinformationen aus dem Prozess bzw. zum Eingriff in die Anlage, also zur Beeinflussung des Prozesses.

Zur Steuerung und/oder Überwachung der Anlage 12 weist das Automatisierungsgerät 10 in einem Speicher 14 eine Automatisierungslösung 16 in Form eines oder mehrerer Programme 18, also ein oder mehrere Computerprogramme mit Programmcodeanweisungen, sowie die von dem oder jedem Programm 18 erzeugten oder verwendeten Daten 20 auf. Zur Vereinfachung der weiteren Beschreibung wird diese ohne Verzicht auf eine weitergehende Allgemeingültigkeit am Beispiel genau eines von der Automatisierungslösung 16 umfassten Programms 18 fortgesetzt. Das Programm 18 wird durch eine Verarbeitungseinheit 22, also zum Beispiel einen Mikroprozessor oder dergleichen, im Betrieb des Automatisierungsgeräts 10 ausgeführt.

Die Automatisierungslösung 16 und speziell die Funktionalität des davon umfassten Programms 18 bestimmt in an sich bekannter Art und Weise den automatischen oder halbautomatischen Ablauf des technischen Prozesses und die dafür erforderliche Interaktion des Automatisierungsgeräts 10 mit der Anlage 12. Ein Eingriff in die Anlage 12 ist darüber hinaus auch über ein oder mehrere Bedien- und Beobachtungsgeräte 24 möglich, die im Folgenden auch kurz entsprechend der Fachterminologie als BuB-Geräte 24 bezeichnet sind, wobei auch hier zur Vereinfachung der Beschreibung, aber ohne Verzicht auf eine weitergehende Allgemeingültigkeit, die Beschreibung am Beispiel genau eines BuB-Geräts 24 fortgesetzt wird. Für eine solche Wechselwirkung sind das BuB-Gerät 24 und das Automatisierungsgerät 10 in an sich bekannter Art und Weise auf leitungslosem oder leitungsgebundenem Weg kommunikativ verbunden.

Ein Eingriff in die Anlage 12 mittels eines BuB-Geräts 24 erfolgt nicht unmittelbar durch das BuB-Gerät 24, sondern mittelbar über das Automatisierungsgerät 10 und dessen Automatisierungslösung 16. Gemäß dem Stand der Technik ist dafür erforderlich, dass ein kompletter Datenhaushalt des Automatisierungsgeräts 10 auch beim BuB-Gerät 24 bekannt ist, um so einzelne in dem Programm 18 angelegte Variablen und damit Daten 20 der Automatisierungslösung 16 verwenden zu können. Ein solcher Eingriff wird demnach als Eingriff in die Anlage 12 auf Basis des Programmiermodells des Automatisierungsgeräts 10 bezeichnet. Zum Schließen eines Ventils wird dabei in eine Variable, die im Rahmen eines sogenannten Transfers eines Prozessabbilds der Ausgänge den Zustand des Ventils beeinflusst, ein geeigneter Wert eingetragen (z.B. DB6.open = 1).

Die Erfindung bricht mit dem bisher durchgängig verfolgten Konzept der Verwendung des Programmiermodells des Automatisierungsgeräts 10 zur Bedienung einer jeweils gesteuerten und/oder überwachten Anlage.

Dafür weist das Automatisierungsgerät 10 in seinem Speicher 14 ein weiteres Computerprogramm auf, das im Folgenden zur Unterscheidung als Bedieninterpreter 26 bezeichnet wird.

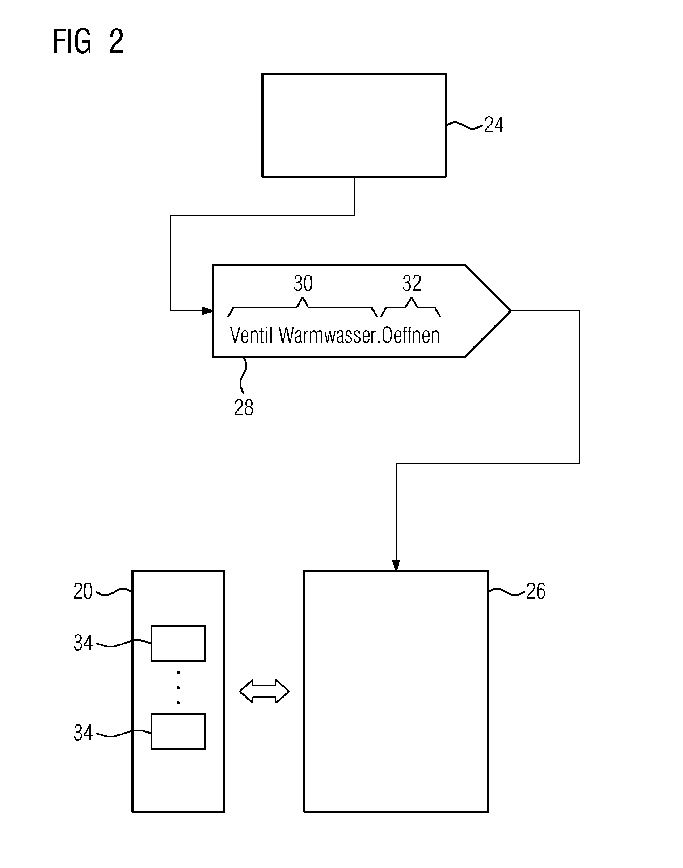

FIG 2 zeigt insoweit einerseits einen Ausschnitt aus der Darstellung in FIG 1 und andererseits weitere Details im Zusammenhang mit dem Bedieninterpreter 26. Bei dem Bedieninterpreter 26 handelt es sich um einen technologieorientierten Bedieninterpreter 26, so dass insoweit der technologieorientierte Bedieninterpreter 26 nicht mit anderen Interpretern oder Bedieninterpretern verwechselt werden darf. Im Sinne einer sprachlich knappen Darstellung wird der technologieorientierte Bedieninterpreter 26 mitunter kurz auch nur als Bedieninterpreter 26 bezeichnet.

Der Bedieninterpreter 26 hat einerseits Zugriff auf den Datenhaushalt der Automatisierungslösung 16 und damit auf deren Daten 20. Andererseits kann der Bedieninterpreter 26 externe Kommandos 28, also zum Beispiel vom BuB-Gerät 24 kommende Kommandos 28, bedienen, indem solche Kommandos 28 analysiert und entsprechend der Analyse umgesetzt werden. Die Übermittlung eines Kommandos 28 an den Bedieninterpreter 26 ist in FIG 2 mit entsprechenden, vom BuB-Gerät 24 ausgehenden und beim Bedieninterpreter 26 endenden Pfeilen dargestellt. Das Kommando 28 umfasst eine Instanzbezeichnung 30, nämlich hier als Beispiel "Ventil Warmwasser", und einen Befehl 32, nämlich hier als Beispiel "Oeffnen". Der Bedieninterpreter 26 extrahiert aus jeweils einem Kommando 28 zumindest eine Instanzbezeichnung 30 und zumindest einen Befehl 32. Der Bedieninterpreter 26 weist dafür eine grundsätzlich an sich bekannte Parserfunktionalität auf, die eine dafür erforderliche Analyse eines in Form einer Zeichenkette (string) übermittelten Kommandos 28 und die anschließende Extraktion einzelner Elemente der Zeichenkette erlaubt. Anschließend sucht der Bedieninterpreter 26 im Datenhaushalt der Automatisierungslösung 16, also in den Daten 20, ein zu der extrahierten Instanzbezeichnung 30 passendes Objekt 34. Im Erfolgsfalle, wenn also ein passendes Objekt 34 gefunden wurde, prüft der Bedieninterpreter 26, ob der in dem Kommando 28 enthaltene Befehl 32 für das gefundene Objekt 34 definiert ist. Ist auch dies der Fall, veranlasst der technologieorientierte Bedieninterpreter 26 eine Ausführung des Befehls 32 für das gefundene Objekt 34.

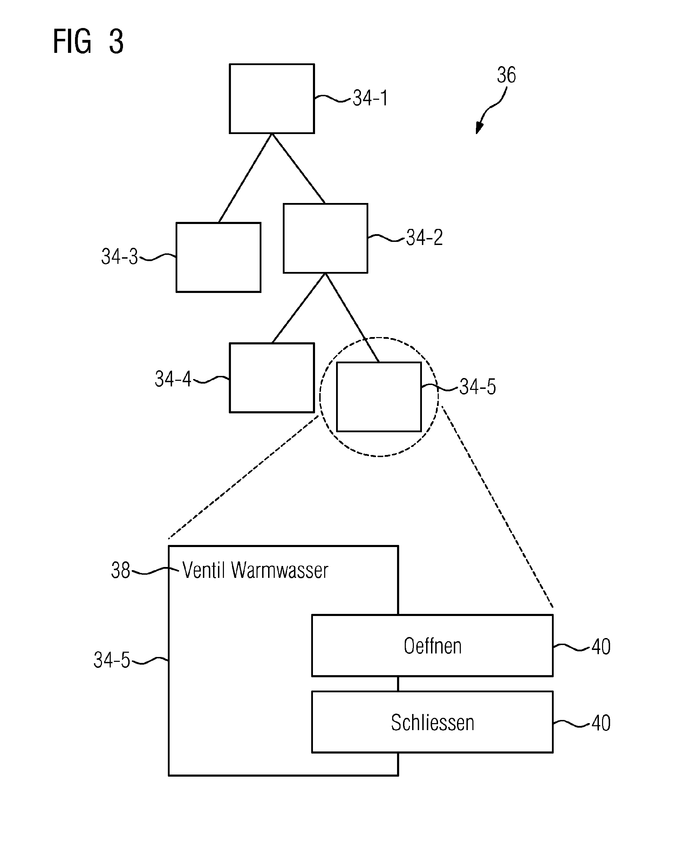

Dies wird anhand von FIG 3 weiter erläutert. Danach sind die Objekte 34 zum Beispiel in Form eines Projektbaums 36 hierarchisch baumartig organisiert. Die Verwendung eines Projektbaums 36 und die resultierende baumartige Struktur sind optional, auch wenn die baumartige Organisation der Daten eine besonders übersichtliche und leicht zu durchsuchende Struktur darstellt.

In der Darstellung in FIG 3 umfasst der Projektbaum 36 fünf Objekte 34, die zur Unterscheidung mit 34-1, 34-2, 34-3, 34-4 und 34-5 bezeichnet sind. Ein erstes Objekt 34-1 stellt die Wurzel des Projektbaums 36 dar und repräsentiert damit zum Beispiel die gesamte Anlage 12. Ein hierarchisch darunter angeordnetes zweites und drittes Objekt 34-2, 34-3 repräsentiert zum Beispiel einen Anlagenteil, hier zum Beispiel einen Anlagenteil zum Dosieren und einen Anlagenteil zum Mischen. In einer hierarchisch darunter angeordneten Ebene befinden sich Objekte, die Komponenten der jeweiligen Anlagenteile repräsentieren. Gezeigt sind hier nur noch zwei weitere Objekte 34, nämlich ein viertes und ein fünftes Objekt 34-4, 34-5, die ein Kaltwasserventil und ein Warmwasserventil repräsentieren sollen. Es ist klar, dass ein solcher Projektbaum 36 in der Realität viel umfangreicher ist, als dies hier dargestellt ist und die Darstellung ist nur aus Gründen der Übersichtlichkeit beschränkt und soll im Übrigen keinen vollständigen Projektbaum 36 zeigen, sondern das Verständnis einzelner Aspekte des hier vorgestellten Ansatzes erleichtern.

Im unteren Bereich der Darstellung in FIG 3 ist stellvertretend für die vom Projektbaum 36 umfassten Objekte 34 das fünfte Objekt mit weiteren Details gezeigt. Jedes Objekt 34 weist einen Instanznamen 38 auf und der Instanzname 38 des vergrößert dargestellten fünften Objekts 34-5 lautet "Ventil Warmwasser", weil hier angenommen war, dass das fünfte Objekt ein Warmwasserventil repräsentiert. Selbstverständlich sind die Instanznamen 38 und weitere im Folgenden erwähnte Namen und Bezeichnungen grundsätzlich frei wählbar, aber im Sinne einer besseren Verständlichkeit der Funktion der einzelnen Objekte 34 empfehlen sich sogenannte sprechende Namen, die also einen Anhalt hinsichtlich der jeweiligen Funktion geben. Für jedes Objekt 34 können ein oder mehrere Aktionen 40 definiert sein und für das dargestellte fünfte Objekt 34-5 sind zum Beispiel die Aktionen 40 "Oeffnen" und "Schließen" definiert. Die Bezeichnungen "Oeffnen" und "Schließen" sind dabei zunächst nur die Namen der Aktionen 40 und anhand dieser Namen erfolgt einerseits die Überprüfung, ob für ein bestimmtes Objekt 34 eine bestimmte Aktion 40 überhaupt definiert ist und andererseits ein eventueller Aufruf einer Aktion 40.

Wenn also gemäß FIG 2 ein Kommando 28 mit einer Instanzbezeichnung 30 "Ventil Warmwasser" und einem Befehl 32 "Oeffnen" an den Bedieninterpreter 26 gelangt, teilt dieser das Kommando 28 im Rahmen einer Analyse des eingehenden Befehls 28 in Instanzbezeichnung 30 und Befehl 32 auf. Wenn der Datenhaushalt der Automatisierungslösung 16 in einem Projektbaum 36 mit einer Mehrzahl von Objekten 34 baumartig organisiert ist, wie dies in FIG 3 gezeigt ist, sucht der Bedieninterpreter 26 in dem Projektbaum 36 das zu der Instanzbezeichnung 30 passende Objekt 34 (korrespondierendes Objekt 34), also ein Objekt 34, dessen Instanzname 38 mit der in dem Kommando 28 angegebenen Instanzbezeichnung 30 oder einem in dem Kommando 28 angegebenen Instanznamenspfad übereinstimmt. Im Erfolgsfalle, wenn also ein in diesem Sinne passendes Objekt gefunden ist, was bei der in FIG 3 gezeigten Situation in Gestalt des fünften Objekts 34-5 der Fall ist, prüft der Bedieninterpreter 26 ob der in dem Kommando 28 enthaltene Befehl 32 für das gefundene Objekt 34 definiert ist. Für den Befehl 32 "Oeffnen" kann tatsächlich in dem gefundenen Objekt 34-5 eine übereinstimmend bezeichnete Aktion 40 gefunden werden. Anhand dieser Untersuchungen "weiß" der Bedieninterpreter 26 damit, wie das eingehende Kommando 28 bearbeitet werden muss, nämlich indem die gefundene Aktion 40 "Oeffnen" des gefundenen Objekts 34-5 "Ventil Warmwasser" ausgeführt wird.

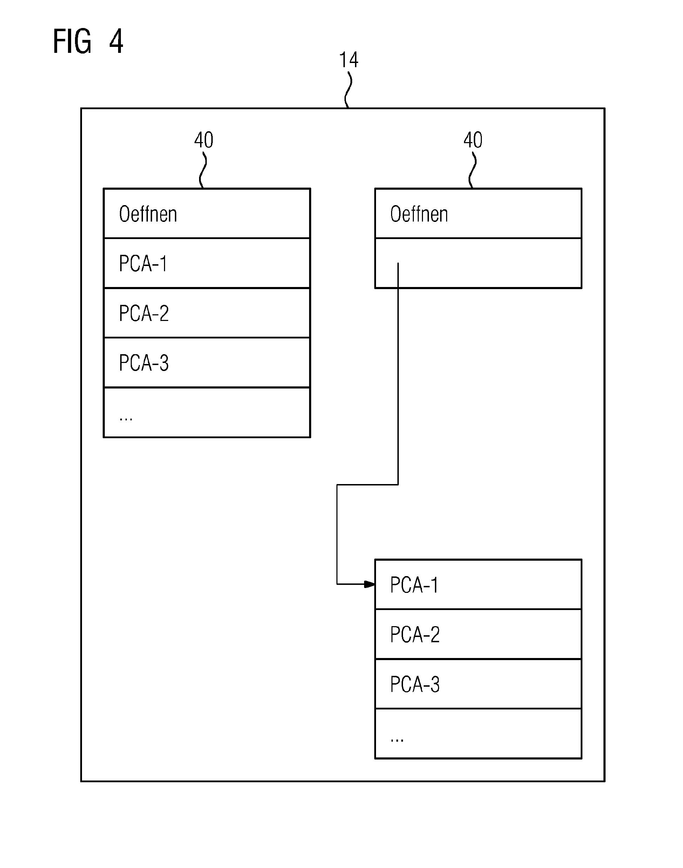

Der Aspekt des Ausführens eines beim Bedieninterpreter 26 eingehenden Kommandos 28 und die resultierende Ausführung einer Aktion 40 eines Objekts 34 aus dem Datenhaushalt der Automatisierungslösung 16 wird in FIG 4 weiter erläutert. Dabei zeigt FIG 4 zwei denkbare Varianten. Auf der linken Seite der Darstellung in FIG 4 ist gezeigt, dass die Aktion 40 selbst eine Mehrzahl von hier nur symbolisch als PCA-1, PCA-2, usw. dargestellten Programmcodeanweisungen umfasst, um die Funktionalität der jeweiligen Aktion 40 zu implementierten. Alternativ kann die Aktion auch eine Referenz (auf der rechten Seite der Darstellung in FIG 4 durch einen Pfeil verdeutlicht) auf eine an einem anderen Ort im Speicher 14 des Automatisierungsgeräts 10 abgelegte Folge von Programmcodeanweisungen zur Implementation der Funktionalität der jeweiligen Aktion 40 umfassen. Die Verwendung einer Referenz hat den Vorteil, dass der Speicherbedarf des Projektbaums 36 und der davon umfassten Objekte 34 so gering wie möglich bleibt.

Die Programmcodeanweisungen sind im gewählten Beispiel wirksam, um eine Speicherstelle, die beim sogenannten Transfer des Prozessabbilds der Ausgänge den Zustand des betreffenden Ventils beeinflusst und ein Öffnen des Ventils auslöst, auf einen dafür notwendigen Wert zu setzen (zum Beispiel "DB6.open = 1"). Wenn ein Objekt 34 ein anderes Aggregat oder einen anderen Aktor innerhalb der Anlage 12 repräsentiert, gelten diese Ausführungen entsprechend.

Die Programmcodeanweisungen können darüber hinaus bevor oder nachdem eine Speicherstelle geeignet beeinflusst wird, Überprüfungen, Verriegelungen, insbesondere im Hinblick auf Synchronisationszwecke, Sicherheitsabfragen, Berechtigungsabfragen und so weiter realisieren, so dass die durch die jeweilige Aktion 40 kodierte Einflussnahmemöglichkeit auf die Anlage 12 auf Situationen beschränkt ist, in denen solche Überprüfungen und dergleichen zu einem für die weitere Ausführung der Aktion 40 notwendigen Ergebnis führen. Eine Möglichkeit zur Formulierung solcher Überprüfungen ist an sich bekannt, so dass hier, abgesehen von dem Hinweis, dass dies im einfachsten Fall mit einer "if-then-Anweisung" möglich ist, weitere Ausführungen entbehrlich sind. Die Art und der Umfang solcher Überprüfungen kann grundsätzlich beliebig komplex sein und eine Auswertung einer Vielzahl von logischen und/oder arithmetischen Relationen umfassen.

Eine besonders günstige Möglichkeit zur Verwendung von Referenzen in einer für ein Objekt 34 im Projektbaum 36 definierten Aktion 40 besteht in Form eines Funktionsaufrufs (Function Call - FC), bei dem ein hier als Index bezeichneter Zahlenwert die Auswahl einer speziellen Teilfunktionalität der aufgerufenen Funktion ermöglicht.

Eine solche Funktion, die zum Beispiel von anderen Funktionen durch Hinzufügung eines Zahlenwertes unterscheidbar ist, also zum Beispiel eine Funktion mit der Bezeichnung "FC80" kann dabei wie folgt realisiert sein:

```
     case index
     1: PCA-1-1
          PCA-1-2
          ..
          break
     2: PCA-1-1
          PCA-1-2
          ..
          break
     ..
     7: if( Bedingung )
               DB6.open = 1
          break
     endcase
```

Auf diese Weise kann eine Vielzahl von mit einer Aktion 40 aufrufbaren Funktionalitäten in einer Funktion zusammengefasst sein. Die Referenzierung einer solchen Funktion und darin der jeweiligen Teilfunktionalität kann zum Beispiel wie folgt lauten: "FC80, Index=7, Parameter,...".

Jedes Kommando 28 kann einen oder mehrere Parameter umfassen und jeder Parameter kann als Eingangsparameter, als Ausgangsparameter oder als Ein-/Ausgangsparameter fungieren. Die Programmcodeanweisungen zur Implementation einer jeweiligen Aktion 40 sind damit auch zur Entsorgung und Versorgung einzelner oder mehrerer Parameter einer Parameterliste eines jeweiligen Kommandos 28 wirksam.

Auf diese Weise kann innerhalb des Datenhaushalts des Automatisierungsgeräts 10 durch das Anlegen von Objekten 34 mit jeweils zumindest einer Aktion 40, gegebenenfalls durch eine Zusammenfassung und hierarchische Strukturierung solcher Objekte 34, in einem Projektbaum 36 quasi eine eigene Sprache zum Eingriff in die jeweilige Anlage 12 definiert werden. Die Namen der Objekte 34 und die Bezeichnungen der für die Objekte 34 definierten Aktionen 40 sind die Vokabeln dieser Sprache. Diese werden verwendet, indem ein Kommando 28 an den Bedieninterpreter 26 gesandt wird. Der Bedieninterpreter 26 überprüft dann gewissermaßen die Syntax dieser Sprache, indem nur solche Kommandos 28 überhaupt zur Ausführung gelangen, deren Instanzbezeichnung 30 und deren Befehl 32 im Datenhaushalt des Automatisierungsgeräts 10 eine Entsprechung in Form eines passenden Objekt 34 und einer für dieses Objekt 34 definierten, passenden Aktion 40 finden. Insgesamt ist damit auf abstrakter Ebene eine Sprache definiert, die unabhängig vom Programmiermodell des Automatisierungsgeräts 10 ist und damit unabhängig vom Programmiermodell des Automatisierungsgeräts 10 Eingriffe in die jeweils gesteuerte und/oder überwachte Anlage 12 erlaubt. Zur weiteren Vereinfachung der nachfolgenden Beschreibung wird das bisher vorgestellte Konzept kurz auch nur als Sprache bezeichnet, wobei sich von selbst versteht, dass der Begriff Sprache eigentlich nur die Wirkungen und Vorteile der zugrunde liegenden technischen Lösung erfasst.

Einzelne Kommandos 28 einer solchen Sprache sind - wie beschrieben - darauf ausgerichtet, einen Zustand der Anlage zu beeinflussen, etwa indem ein Ventil geschlossen wird. Genauso sind Kommandos 28 denkbar und vorgesehen, die einen Zustand der Anlage erfassen, etwa ob ein Ventil geschlossen ist, ob ein maximaler Füllstand eines Mischerbehälters oder dergleichen erreichet ist, und so weiter. Die Gesamtheit der möglichen Kommandos 28 lässt sich damit grob in zwei Gruppen, nämlich technologische Befehlskommandos einerseits, mit denen ein Zustand der Anlage 12 beeinflusst werden soll, und technologische Statuskommandos andererseits, mit denen ein Zustand der Anlage 12 abgefragt wird, unterteilen.

Für die Implementierung dieser Kommandos 28 in Form jeweils einer einem Objekt 34 zugeordneten Aktion 40 werden - wie beschrieben - die Programmvariablen gemäß dem Programmiermodell des Automatisierungsgeräts 10 benutzt. Diese Programmvariablen treten jedoch nach außen nicht zutage und sind durch die Objekte 34 und deren Aktionen 40 gekapselt. Die Objekte 34 und die Aktionen 40 definieren damit nicht nur die oben genannte Sprache, sondern auch eine wohldefinierte Schnittstelle zu solchen Programmvariablen und dergleichen.

Nachfolgend sind einige Beispiele technologischer Befehlskommandos und technologischer Statuskommandos aufgeführt.

Standard-Befehlskommandos für technische Funktionen:
- Anhalten (Zustandswechsel)
- Fortsetzen (Zustandswechsel)

Befehlskommandos für Einzelsteuereinheiten wie Motoren, Ventile, etc.:
- Motordrehzahl vorgeben (mit Parameter Drehzahl)
- Motor starten
- Ventil öffnen
- Ventil schließen

Standard-Statuskommandos für technische Funktionen:
- RUN (Betriebszustand Ablaufsteuerung)
- STARTING (Betriebszustand Ablaufsteuerung)
- Sollwert erreicht

Statuskommandos für Einzelsteuereinheiten wie Motoren, Ventile, etc.:
- Motor läuft
- Motor gestoppt
- Ventil geöffnet
- Ventil geschlossen
- Regeldifferenz kleiner (mit Parameter x)

Als Standard-Befehlskommando ist natürlich auch das Setzen einer Steuervariablen denkbar. Analog kann es ein Standard-Statuskommando für das Abfragen einer Steuervariablen geben.

Mit dem hier vorgestellten Ansatz können auf dem Automatisierungsgerät 10 Programm- und/oder Bausteinstrukturen geändert werden, ohne dass zwangsläufig auch die Bedien- und Diagnosegeräte tangiert sind. Das neuartige Bedienmodell, das durch den Bedieninterpreter 26 auf dem Automatisierungsgerät 10 unterstützt wird, ist unabhängig vom jeweiligen Programmiermodell des Automatisierungsgeräts 10. Mit diesem Ansatz ist sogar von ein und demselben BuB-Gerät 24 ein Zugriff auf mehrere Automatisierungsgeräte 10 möglich, die jeweils ein unterschiedliches Programmiermodell verwenden. Innerhalb eines solchen Zugriffs auf diese Automatisierungsgeräte 10 ist dann ein Eingriff in die jeweilige Anlage 12 möglich.

Das BuB-Gerät 24 oder die BuB-Geräte 24 kann bzw. können sich damit auf ein technologisches Bedienmodell beschränken und sind damit unabhängig von dem oder den Programmen 18 der Automatisierungslösung 16. Diese Entkopplung erlaubt rückwirkungsfreie Programm- oder Programmstrukturänderungen. Das Ändern oder Erweitern der Implementierung eines Kommandos 28 in Form einer einem Objekt 34 zugeordneten Aktion 40 kann unabhängig von der technologieorientierten Beschreibung der am BuB-Gerät 24 verfügbaren Funktionalität erfolgen und auf das Automatisierungsgerät 10 nachgeladen werden.

Der hier beschriebene Ansatz erlaubt und ermöglicht neuartige softwaretechnische Bedienwerkzeuge, die mittelbar direkt auf den Programmvariablen des Datenhaushalts des Automatisierungsgeräts 10 arbeiten, ohne dass diese nach außen zutage treten. Unmittelbar arbeiten solche Bedienwerkzeuge dann mit technologischen oder technologieorientierten Befehls- und/oder Statuskommandos, die sich auf einzelne Einheiten oder Aggregate, insbesondere Einzelsteuereinheiten und sonstige technische Einrichtungen, der jeweiligen Anlage 12 beziehen.

Mittels eines handelsüblichen Laptops, Smartphones, Handbediengeräts, usw., das an den physikalischen Anlagenbus oder direkt an das Automatisierungsgerät 10 angeschlossen wird, kann eine einfache Bedienung der Anlage durch einen Technologen, der dafür keine Programmierkenntnisse benötigt und ohne dass technologische Beschreibungsdaten auf dem jeweils benutzten Gerät verfügbar oder erforderlich sind, erfolgen.

Durch die Einführung des Bedieninterpreters 26 können alle Eingriffe in die Anlage (Befehle und Statusabfragen) zentral synchronisiert werden. Außerdem erlaubt die Verwendung des Bedieninterpreters 26 einen zentralen Belegungsmechanismus für Einzelsteuereinheiten oder technische Einrichtungen oder sogar ganze Anlagenteile. Der hier vorgestellte Ansatz stellt auch eine Lösung des Problems der gemeinsamen Betriebsmittel (shared resources) dar, wenn zum Beispiel verschiedene Fahrweisen einer Anlage, etwa Einrichten, Produzieren, Reinigungen, etc., dieselben Einzelsteuereinheiten oder technischen Einrichtungen nutzen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Es wird unter anderem ein Verfahren zum Betrieb eines Automatisierungsgeräts 10 angegeben, in dessen Speicher 14 eine Automatisierungslösung 16 geladen ist, wobei ein technologieorientierter Bedieninterpreter 26 einerseits Zugriff auf einen Datenhaushalt der Automatisierungslösung 16 hat und andererseits externe Kommandos 28 bedienen kann, indem solche Kommandos 28 analysiert und entsprechend der Analyse umgesetzt werden, wobei der technologieorientierte Bedieninterpreter 26 aus jeweils einem Kommando 28 zumindest eine Instanzbezeichnung 30 und zumindest einen Befehl 32 extrahiert, wobei der technologieorientierte Bedieninterpreter 26 im Datenhaushalt der Automatisierungslösung 16 ein zu der Instanzbezeichnung 30 passendes Objekt 34 sucht und im Erfolgsfalle prüft, ob der in dem Kommando 28 enthaltene Befehl 32 für das gefundene Objekt 34 definiert ist und wobei der technologieorientierte Bedieninterpreter 26 eine Ausführung des Befehls 32 für das gefundene Objekt 34 veranlasst. Damit wird eine technologieorientierte Möglichkeit realisiert, um von Seiten eines Bedien- und Beobachtungsgeräts 24 auf ein Automatisierungsgerät 10 und die dort im Programmiermodell des Automatisierungsgeräts 10 angelegten Daten zugreifen zu können, ohne selbst das Programmiermodell des Automatisierungsgeräts kennen oder gar nutzen zu müssen. Basis ist eine technologische Anlagenbeschreibung, zum Beispiel in Form eines Projektbaums 36. Der technologieorientierte Bedieninterpreter 26 bildet die Schnittstelle zwischen dem Bedien- und Beobachtungsgerät 24 und den von dort abgesetzten Kommandos 28 und einer solchen technologischen Anlagenbeschreibung.

## Patentansprüche

1. Verfahren zum Betrieb eines Automatisierungsgeräts (10), in dessen Speicher (14) eine Automatisierungslösung (16) geladen ist,
wobei ein technologieorientierter Bedieninterpreter (26) einerseits Zugriff auf einen Datenhaushalt der Automatisierungslösung (16) hat und andererseits externe Kommandos (28) bedienen kann, indem solche Kommandos (28) analysiert und entsprechend der Analyse umgesetzt werden,
wobei der technologieorientierte Bedieninterpreter (26) aus jeweils einem Kommando (28) zumindest eine Instanzbezeichnung (30) und zumindest einen Befehl (32) extrahiert,
wobei der technologieorientierte Bedieninterpreter (26) im Datenhaushalt der Automatisierungslösung (16) ein zu der Instanzbezeichnung (30) passendes Objekt (34) sucht und im Erfolgsfalle prüft, ob der in dem Kommando (28) enthaltene Befehl (32) für das gefundene Objekt (34) definiert ist und
wobei der technologieorientierte Bedieninterpreter (26) eine Ausführung des Befehls (32) für das gefundene Objekt (34) veranlasst.

2. Verfahren nach Anspruch 1, wobei der Datenhaushalt der Automatisierungslösung (16) in einem Projektbaum (36) mit einer Mehrzahl von Objekten (34) baumartig organisiert ist und wobei im Rahmen des an den technologieorientierten Bedieninterpreter (26) gerichteten Kommandos (28) als Instanzbezeichnung (30) ein Instanznamenspfad angegeben wird.

3. Verfahren nach Anspruch 2, wobei einzelne Objekte (34) des Projektbaums (36) als Basis für mit einem externen Kommando (28) übermittelbare Befehle (32) jeweils zumindest eine Aktion (40) definieren oder referenzieren.

4. Verfahren nach Anspruch 3, wobei eine einem Objekt (34) des Projektbaums (36) zugeordnete Aktion (40) ein oder mehrere Sicherheitsabfragen umfasst.

5. Verfahren nach Anspruch 3 oder 4, wobei eine einem Objekt (34) des Projektbaums (36) zugeordnete Aktion (40) ein oder mehrere Abfragen für einen Zugriffsschutz umfasst.

6. Verfahren nach einem der Ansprüche 3, 4 oder 5, wobei eine Ausführung einer Mehrzahl von entsprechend einem mit einem Kommando (28) übermittelten Befehl (32) spezifizierten Aktionen (40) zentral synchronisiert wird.

7. Computerprogramm mit Programmcodemitteln, um alle Schritte von jedem beliebigen der Ansprüche 1 bis 6 durchzuführen, wenn das Computerprogramm auf einem Automatisierungsgerät (10) zur Steuerung und/oder Überwachung einer Anlage (12) ausgeführt wird.

8. Computerprogramm, das in einem Verfahren nach einem der Ansprüche 1 bis 6 als technologieorientierter Bedieninterpreter (26) fungiert, wobei der technologieorientierte Bedieninterpreter (26) einerseits Zugriff auf einen Datenhaushalt der Automatisierungslösung (16) hat und andererseits externe Kommandos (28) bedienen kann, indem solche Kommandos (28) analysiert und entsprechend der Analyse umgesetzt werden,
wobei durch den technologieorientierten Bedieninterpreter (26) aus jeweils einem Kommando (28) zumindest eine Instanzbezeichnung (30) und zumindest ein Befehl (32) extrahierbar sind,
wobei der technologieorientierte Bedieninterpreter (26) eingerichtet ist, um im Datenhaushalt der Automatisierungslösung (16) ein zu der Instanzbezeichnung (30) passendes Objekt (34) zu suchen und weiterhin dafür eingerichtet ist, im Erfolgsfalle zu prüfen, ob der in dem Kommando (28) enthaltene Befehl (32) für das gefundene Objekt (34) definiert ist und wobei durch den technologieorientierten Bedieninterpreter (26) der Befehl (32) für das gefundene Objekt (34) ausführbar ist.

9. Computerprogrammprodukt mit Programmcodemitteln, die auf einem computerlesbaren Datenträger gespeichert sind, um das Verfahren nach jedem beliebigen der Ansprüche 1 bis 6 durchzuführen, wenn das Computerprogrammprodukt auf einem Automatisierungsgerät (10) zur Steuerung und/oder Überwachung einer Anlage (12) ausgeführt wird.

10. Automatisierungsgerät (10) mit einer Verarbeitungseinheit (22) und einem Speicher (14), in den ein Computerprogramm nach einem der Ansprüche 7 oder 8 geladen ist, das im Betrieb des Automatisierungsgeräts (10) durch die Verarbeitungseinheit (22) ausgeführt wird.
